# DEMANDE DE BREVET EUROPEEN

(11) **EP 1 243 493 A1**
(43) Date de publication de la demande: **25.09.2002**
(21) Numéro de dépôt: 02290682.0
(22) Date de dépôt: 19.03.2002
(51) Int. Cl.: B60T 13/57

(54) **Servomoteur d'assistance à écoulement simplifié**

(30) Priorité: 23.03.2001 FR 0103914
(71) Demandeur: Delphi Technologies, Inc., Troy, MI 48007 (US)
(72) Inventeur: Petin, Bernard, 77410 Claye-Souilly (FR); Genaudeau, Joseph, 77186 Noisiel (FR); Castel, Philippe, 75005 Paris (FR)
(74) Mandataire: Laget, Jean-Loup

(57) **Abrégé**

Ce servomoteur d'assistance comporte un carter (2), un piston (4) mobile portant une cloison transversale (7), un plongeur (17) monté mobile dans un alésage axial (11) dudit piston entre une position arrière de repos et des positions avancées d'actionnement, un organe d'obturation (14) fixé dans ledit alésage de manière que, à ladite position de repos du plongeur, ledit organe d'obturation coopère avec un premier siège d'étanchéité (20) porté par le plongeur de façon à isoler une partie arrière d'alésage (22) d'une partie avant d'alésage (44) en communication avec ladite chambre arrière à travers au moins un premier passage (37) et avec ladite chambre avant à travers au moins un second passage (12), ledit ou chaque premier passage s'étendant directement à travers une paroi latérale dudit piston de manière à déboucher dans ledit alésage sensiblement au niveau dudit premier siège d'étanchéité ou en arrière de celui-ci.

## Description

La présente invention concerne un servomoteur d'assistance, notamment pour le freinage d'un véhicule automobile.

On connaît classiquement des systèmes de freinage pour véhicule automobile comportant un servomoteur agencé devant l'entrée d'un maître-cylindre pour y produire, sous la commande d'un moyen de commande, une pression de freinage à transmettre à des freins.

De manière connue, un tel servomoteur comporte un carter, un piston mobile selon un axe dans le carter pour transmettre une force d'assistance. Le piston porte une cloison transversale séparant dans le carter une chambre avant soumise à une pression basse et une chambre arrière soumise à une pression modulable. Un plongeur est monté mobile dans un alésage axial du piston et déplaçable par le moyen de commande entre une position arrière de repos et des positions avancées d'actionnement. Un organe d'obturation est fixé dans l'alésage de manière que, d'une part, à la position de repos du plongeur, ledit organe d'obturation coopère avec un premier siège d'étanchéité porté par le plongeur de façon à isoler une partie arrière d'alésage soumise à une pression haute supérieure à ladite pression basse d'une partie avant d'alésage en communication avec la chambre arrière à travers au moins un premier passage et avec la chambre avant à travers au moins un second passage. Le servomoteur est alors dans un état passif. D'autre part, aux positions avancées du plongeur, un espace ouvert entre le premier siège d'étanchéité et l'organe d'obturation met en communication la partie arrière d'alésage avec la partie avant d'alésage tandis que l'organe d'obturation coopère avec au moins un second siège d'étanchéité de façon à obturer chaque second passage ; le servomoteur étant alors dans un état actif.

Dans ce type de servomoteur, la communication entre la chambre arrière du carter et la partie arrière d'alésage s'effectue selon un trajet compliqué. En effet, lors de l'activation du servomoteur, l'air à pression haute s'écoule axialement dans l'alésage vers l'avant jusqu'au plongeur, il subit un premier changement de direction pour franchir sensiblement radialement ou obliquement l'espace ouvert susmentionné, il subit un second changement de direction pour s'écouler axialement dans un jeu annulaire ménagé autour du plongeur dans la partie avant d'alésage, puis un troisième changement de direction pour sortir radialement du piston à travers un passage de clé. Ce trajet tortueux semé d'obstacles ralentit l'écoulement, génère des pertes de charge et de la turbulence, ce qui produit du bruit de fonctionnement et augmente le temps de réponse du servomoteur.

On peut tenter de palier ces inconvénients en réduisant le diamètre extérieur du plongeur de manière à accroître la section du jeu annulaire formant la partie centrale du trajet d'air. Mais, d'une part, cela peut entraîner des défauts de guidage du plongeur par rapport au piston. D'autre part, cela réduit la section du plongeur apte à entrer en contact avec l'organe d'obturation et accroît donc l'hystérésis entre l'effort de retour et l'effort d'attaque du servomoteur, rendant de ce fait nécessaire une augmentation indésirable de l'effort d'attaque pour conserver un effort résiduel suffisant à l'ergonomie et à la sécurité du système, c'est-à-dire un effort de retour de l'ordre de 50 N par exemple.

On connaît par WO 96/07573 un servomoteur à hystérésis réduite. Mais ce dispositif présente des formes de moyen d'obturation et d'alésage de piston compliquées, ce qui accroît leur coût de réalisation.

En outre, la demande de brevet français n° 2 794 090 appartenant à la demanderesse décrit un servomoteur dans lequel chaque second siège d'étanchéité est ménagé sur le piston sur le bord des seconds passages susmentionnés.

L'invention vise à fournir un servomoteur silencieux et dont le temps de réponse soit contrôlable en s'affranchissant des inconvénients précités.

Pour cela, l'invention fournit un servomoteur d'assistance, notamment pour le freinage d'un véhicule automobile, comportant un carter, un piston mobile selon un axe dans ledit carter pour transmettre une force d'assistance, ledit piston portant une cloison transversale séparant dans le carter une chambre avant dans laquelle règne une pression basse et une chambre arrière dans laquelle règne une pression modulable, un plongeur monté mobile dans un alésage axial dudit piston et déplaçable par un moyen de commande entre une position arrière de repos et des positions avancées d'actionnement, un organe d'obturation fixé dans ledit alésage de manière que, d'une part, à ladite position de repos du plongeur, ledit organe d'obturation coopère avec un premier siège d'étanchéité porté par le plongeur de façon à isoler une partie arrière d'alésage, dans laquelle règne une pression haute supérieure à ladite pression basse, d'une partie avant d'alésage en communication avec ladite chambre arrière à travers au moins un premier passage et avec ladite chambre avant à travers au moins un second passage, le servomoteur étant alors dans un état passif, et d'autre part, auxdites positions avancées du plongeur, un espace ouvert entre ledit premier siège d'étanchéité et ledit organe d'obturation met en communication ladite partie arrière d'alésage avec ladite partie avant d'alésage tandis que ledit organe d'obturation coopère avec au moins un second siège d'étanchéité de façon à obturer ledit ou lesdits second(s) passage(s), le servomoteur étant alors dans un état actif, ledit ou chaque premier passage s'étendant directement à travers une paroi latérale du piston de manière à déboucher dans l'alésage sensiblement au niveau du premier siège d'étanchéité ou en arrière de celui-ci.

De préférence, selon l'invention, l'alésage du piston présente une face d'épaulement tournée vers l'arrière entre deux étages d'alésage, l'étage de moindre diamètre parmi lesdits deux étages d'alésage étant conçu pour guider en translation un corps dudit plongeur.

Ainsi, la circulation d'air entre ledit espace ouvert et la chambre arrière et inversement s'effectue selon une trajectoire directe sensiblement rectiligne, ce qui régularise l'écoulement, minimise les pertes de charge et la turbulence de l'écoulement, et par conséquent réduit le bruit de fonctionnement du servomoteur et son temps de réponse. Le jeu radial entre le corps du plongeur et l'alésage du piston peut être restreint au minimum, de manière compatible avec le guidage en translation du plongeur et l'adaptation de la section du ou des premier(s) passage(s) en fonction du temps de réponse désiré n'a plus d'effet indésirable sur la force de retour ou sur le guidage du plongeur.

De préférence, selon l'invention, ledit ou chaque second passage débouche dans la partie avant d'alésage à travers ladite face d'épaulement, et ledit ou chaque premier passage débouche dans ledit alésage du piston aussi à travers ladite face d'épaulement sur une partie ou sur la totalité de la section du premier passage.

De ce fait, le ou les premier(s) et le ou les seconds passage(s) peuvent être obturés à l'aide d'une seule lèvre de clapet montée dans l'alésage du piston sensiblement parallèlement à la face d'épaulement, ce qui procure un servomoteur de conception simple et peu coûteuse.

De préférence, le ou chaque premier passage s'étend sensiblement selon une direction radiale du piston, ou s'étend obliquement vers l'avant depuis l'intérieur vers l'extérieur du piston. Ainsi, il ne subsiste qu'un seul changement de direction dans l'écoulement entrant depuis l'étage arrière de piston dans la chambre arrière de carter au moment de l'activation du servomoteur, les deuxième et troisième changements de direction susmentionnés étant supprimés.

Avantageusement, l'organe d'obturation est apte à coopérer avec le premier siège d'étanchéité par une lèvre annulaire de l'organe d'obturation, le premier siège d'étanchéité comportant une nervure en saillie sur une face arrière du plongeur en vis-à-vis de ladite lèvre.

De préférence dans ce cas, le ou chaque premier passage présente une paroi arrière débouchant dans l'alésage à l'arrière de la lèvre. Ainsi, chaque premier passage est ménagé dans la paroi latérale du piston à un niveau où celle-ci est fine et exactement dans l'alignement radial de la lèvre annulaire d'étanchéité.

Avantageusement dans ce cas, une clavette est engagée sensiblement perpendiculairement à l'axe du piston à travers le ou un des premier(s) passage(s) et dans une rainure du plongeur pour limiter la longueur de course du plongeur par rapport au piston.

Dans un autre mode de réalisation, chaque premier passage présente une paroi arrière débouchant dans l'alésage à l'avant de la lèvre, une pièce de guidage d'écoulement étant agencée dans un espace entre ladite paroi arrière et la lèvre de manière à présenter en regard dudit ou de chaque premier passage une partie de guidage sensiblement parallèle à la direction du premier passage correspondant.

Ainsi, le premier passage n'étant pas exactement dans l'alignement radial de la lèvre annulaire, l'écoulement se fait selon une direction oblique dans laquelle il est guidé par la pièce de guidage.

Avantageusement, la pièce de guidage d'écoulement est portée par ladite lèvre ou par le piston, une face avant de ladite partie de guidage étant sensiblement dans le prolongement de la paroi arrière de premier passage.

De préférence, la pièce de guidage d'écoulement comporte un anneau de support portant la ou les partie(s) de guidage en saillie vers l'intérieur dudit anneau de support au niveau dudit ou de chaque premier passage.

De préférence, ledit ou chaque second passage s'étend sensiblement axialement dans la paroi latérale du piston à une position angulairement décalée par rapport à chaque premier passage.

Avantageusement, deux seconds passages sont sensiblement symétriques par rapport à un premier plan axial du piston et deux premiers passages sont sensiblement symétriques par rapport à un autre plan axial du piston sensiblement perpendiculaire au premier.

De préférence, ledit ou chaque second siège d'étanchéité comporte une nervure en saillie sur ladite face d'épaulement, ladite nervure entourant uniquement le second passage correspondant.

Avantageusement, une paroi avant dudit ou chaque premier passage s'étend obliquement vers l'avant depuis l'intérieur vers l'extérieur dudit piston, ledit premier siège d'étanchéité se situant sensiblement dans le prolongement de ladite paroi avant auxdites positions avancées du plongeur.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est une vue partielle en coupe axiale selon la ligne brisée I-I de la figure 2 d'un servomoteur dans un premier mode de réalisation de l'invention ;
- la figure 2 est une vue partielle en coupe transverse selon la ligne II-II du servomoteur de la figure 1 ;
- la figure 3 est une vue partielle en coupe axiale selon la ligne brisée III-III de la figure 6 d'un servomoteur dans un second mode de réalisation de l'invention ;
- la figure 4 est une vue analogue à la figure 3 d'une variante du second mode de réalisation de l'invention ;
- la figure 5 est une vue analogue à la figure 1 d'une variante du premier mode de réalisation de l'invention ;
- la figure 6 est une vue partielle en coupe transverse selon la ligne VI-VI du servomoteur de la figure 3.

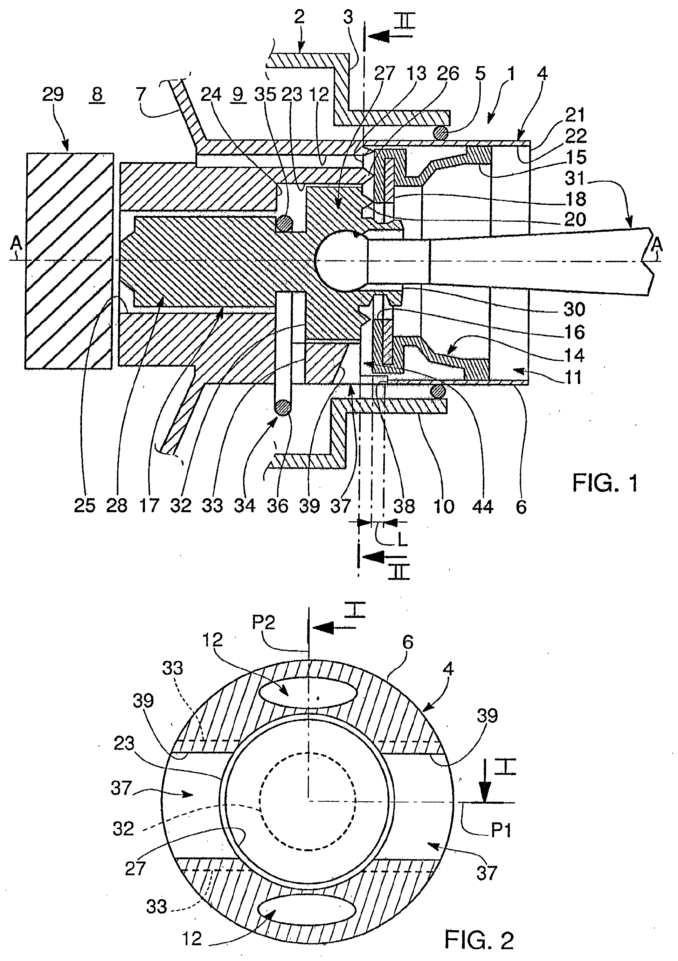

Un premier mode de réalisation de l'invention va maintenant être décrit en référence aux figures 1 et 2. Comme visible à la figure 1, le servomoteur 1 comporte un carter 2, dont seule une paroi arrière 3 est partiellement représentée, et un piston 4. Le piston 4 présente un corps 6 cylindrique mobile selon un axe A-A à travers une ouverture arrière de la paroi 3. Un joint d'étanchéité 5 assure l'étanchéité du contact entre le corps 6 et le carter 2. Le piston 4 comporte aussi une cloison transversale 7 qui divise hermétiquement l'intérieur du carter 2 en une chambre avant 8, située devant la cloison transversale 7, et une chambre arrière 9, située derrière la cloison transversale 7. Dans le cas d'un servomoteur à dépression, la chambre 8 est reliée à une source de dépression (non représentée), pour y maintenir une pression basse inférieure à la pression atmosphérique, tandis que la chambre arrière 9 peut être mise à ladite pression basse ou à la pression atmosphérique.

Lorsqu'il règne une pression plus élevée dans la chambre arrière 9 que dans la chambre avant 8, le servomoteur est activé, le différentiel de pression générant une force d'assistance orientée vers l'avant du carter 2, vers la gauche de la figure 1, et transmise par la cloison transversale 7 au piston 4 pour le déplacer axialement vers l'avant.

L'état de pression de la chambre à pression variable 9 est commandé à l'aide d'un mécanisme de valve comportant un moyen d'obturation 14 et un plongeur 17 agencés dans un alésage axial 11 du corps 6 de piston pour sélectivement mettre en communication la chambre arrière 9, soit avec l'air extérieur, soit avec la chambre avant 8. Une partie d'extrémité arrière 10 du carter 2 est destinée à faire saillie à l'intérieur de l'habitacle d'un véhicule sur lequel le servomoteur 1 est monté. L'entrée arrière 21 de l'alésage 11 est donc en communication avec la pression ambiante.

A partir de l'entrée 21, l'alésage 11 présente un étage arrière 22 de plus grand diamètre, un premier épaulement 13, un étage intermédiaire 23, un second épaulement 24 et un troisième étage 25 de plus petit diamètre débouchant à l'extrémité avant du piston 4. Deux canaux axiaux 12 sont ménagés dans la paroi latérale du corps 6 avec une extrémité avant débouchant dans la chambre avant 8 et une extrémité arrière débouchant dans l'alésage 11 au niveau de l'épaulement 13. Comme visible à la figure 2, les deux canaux 12 sont diamétralement opposés et présentent une section sensiblement elliptique. Un siège d'étanchéité, dit siège de dépression, est formé par deux nervures elliptiques 26 en saillie sur l'épaulement 13 autour de chaque canal 12.

Le moyen d'obturation formé d'un clapet caoutchouc 14 est fixé sur la paroi interne de l'étage arrière 22 d'alésage. Le clapet 14 est un manchon comportant un boudin de fixation 15 à une extrémité arrière et une lèvre d'étanchéité 16 à une extrémité avant. La lèvre 16 présente une face avant annulaire située dans un plan perpendiculaire à l'axe A-A avec une partie radialement extérieure en vis à vis du siège d'étanchéité 26 pour être apte à obturer hermétiquement les canaux 12. Une rondelle 18 est fixée contre la face arrière de la lèvre 16 pour la maintenir dans un plan perpendiculaire à l'axe A-A au cours du fonctionnement du servomoteur.

Le plongeur 17 est monté mobile en translation selon l'axe A-A dans les deuxième et troisième étages 23 et 25 de l'alésage 11. Le plongeur 17 est globalement cylindrique et présente un corps 27 dont le diamètre correspond sensiblement à celui de l'étage intermédiaire 23 et une tête 28 dont le diamètre correspond sensiblement à celui de l'étage 25. Le corps 27 présente une face arrière portant une nervure annulaire 20 en saillie axialement vers l'arrière pour former un autre siège d'étanchéité, dit siège d'air, en vis-à-vis d'une partie radialement intérieure de la lèvre 16. La tête 28 présente une face avant apte à coopérer de manière connue avec un disque de réaction 29. Le plongeur 17 présente un alésage axial 30 ouvert sur sa face arrière pour recevoir une tige de commande 31 articulée au plongeur 17 par une liaison rotule de manière connue. L'extrémité arrière de la tige de commande est destinée à être relié à un moyen de commande manuel ou à pied, par exemple une pédale de frein (non représentée).

Le plongeur 17 présente une gorge périphérique 32 entre la tête 28 et le corps 27. Au moins partiellement au droit de la gorge 32, le corps 6 de piston 4 présente un passage de clé diamétral 33 reliant l'intérieur de l'étage 23 et la chambre arrière 9. Une clavette 34, par exemple en forme sensiblement de fer à cheval, est engagée à travers le passage diamétral 33 avec ses deux branches 35 engagées dans la gorge 32 de chaque côté de l'axe du plongeur 17, afin de limiter le débattement axial du plongeur 17 par rapport au piston 4. De plus, la clavette 34 présente une base 36 en saillie à l'extérieur du piston 4 et apte à venir en butée contre la paroi arrière 3 du carter 2 pour définir une position de recul maximal du piston 4 et du plongeur 17.

Au droit du plongeur 17 en position de repos, le piston 4 présente deux passages 37 reliant la chambre arrière 9 à l'intérieur de l'alésage 11. Chaque passage 37 présente une section sensiblement rectangulaire et en orienté obliquement vers l'avant du piston 4 depuis l'intérieur vers l'extérieur. La dimension axiale des passages 37 correspond sensiblement à une longueur de course du plongeur 17 entre sa position de repos et sa position d'actionnement la plus avancée. A l'intérieur de l'alésage 11, les passages 37 débouchent partiellement sur la paroi latérale de l'étage intermédiaire 23, partiellement sur la face d'épaulement 13 tournée vers l'arrière et partiellement sur la paroi latérale du premier étage 22. La paroi arrière 38 des passages 37 présente un décalage L vers l'arrière de la lèvre 16 du clapet caoutchouc 14. Ainsi, la lèvre 16 est située à un niveau axial correspondant sensiblement au milieu des passages 37.

A la position de repos du plongeur 17, représentée à la figure 1, le siège d'étanchéité 20 s'appuie hermétiquement sur la lèvre 16 du clapet caoutchouc 14 de manière à isoler le deuxième étage 23 de l'entrée 21, tandis que le siège d'étanchéité 26 n'est pas en contact avec la lèvre 16. Ainsi, les deux chambres 8 et 9 sont en communication par l'intermédiaire des canaux 12, de l'espace annulaire 44 entre l'épaulement 13 et la lèvre 16 et des passages 37. Le servomoteur est alors à l'état passif. Des moyens élastiques de rappel (non représentés) sont agencés dans le carter 2, d'une manière connue de l'homme du métier, pour repousser le piston 4 à une position de repos reculée lorsque le servomoteur est à l'état passif.

Lorsque le plongeur 17 est poussé vers l'avant en position d'actionnement par la tige 31, son déplacement ouvre un espace entre la lèvre 16 et le siège d'étanchéité 20. La lèvre 16 se plaque contre le siège d'étanchéité 26 de manière à obturer les canaux 12. De l'air extérieur s'engouffre par l'entrée 21, franchit sensiblement radialement l'espace ouvert entre la lèvre 16 et le siège d'étanchéité 20 puis s'écoule directement à travers les passages 37 dans la chambre 9. La pression dans la chambre arrière 9 devient supérieure à la pression dans la chambre avant 8, ce qui active le servomoteur 1.

La paroi avant 39 des passages 37 présente une inclinaison telle que le siège d'étanchéité 20 se situe sensiblement dans son prolongement lorsque le plongeur est en position d'actionnement. Ainsi, la paroi 39 guide tangentiellement l'écoulement d'air en minimisant la perte de charge. Grâce à l'agencement des passages 37, il n'est pas nécessaire de ménager un jeu radial important entre le corps 27 du plongeur et l'alésage 11, puisque l'air n'a plus besoin de s'écouler entre eux. L'écoulement d'air depuis l'extérieur du piston 4 dans la chambre arrière 9 ne présente qu'un seul changement de direction au niveau de la lèvre 16.

Comme visible à la figure 2, le piston 4 présente deux canaux 12 diamétralement opposés, symétriques par rapport à un premier plan axial P₁, et deux passages 37 diamétralement opposés, symétriques par rapport à un autre plan axial P₂ perpendiculaire au premier. Le passage de clé 33 est orienté parallèlement au premier plan axial P₁. Comme il se situe à un niveau axial du piston 4 plus avancé que les passages 37, le passage de clé 33 peut en fait présenter une orientation angulaire quelconque par rapport aux passages 37, à condition de ne pas couper les canaux 12.

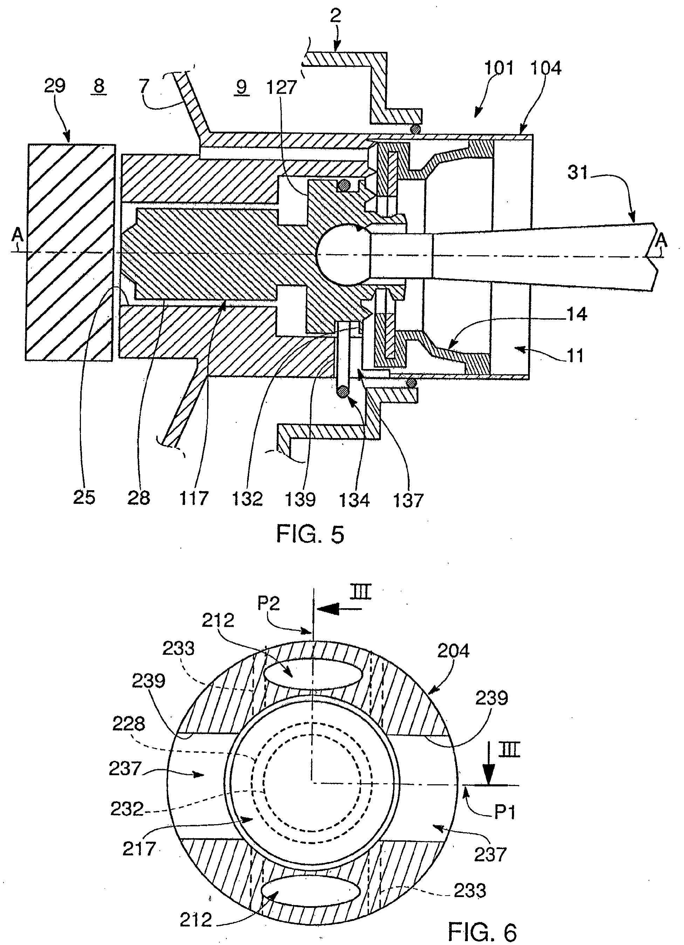

Une variante du premier mode de réalisation va maintenant être décrite en référence à la figure 5. Les éléments modifiés par rapport à ceux précédemment décrits sont désignés par le même chiffre de référence augmenté de 100. Dans la variante de la figure 5, le passage de clé 33 est supprimé. La face avant 139 du passage d'air 137 entre la chambre arrière 9 et l'alésage 11 est perpendiculaire à l'axe A-A du piston 104. Au droit du passage 137, le corps 127 de plongeur 117 présente une gorge périphérique 132. La clavette 134 est engagée à travers le passage 137 et ses deux branches enserrent le corps 127 dans la gorge 132. Pour le reste, le servomoteur 101 est identique au servomoteur 1. Cet agencement permet de réduire la longueur et l'encombrement du servomoteur 101.

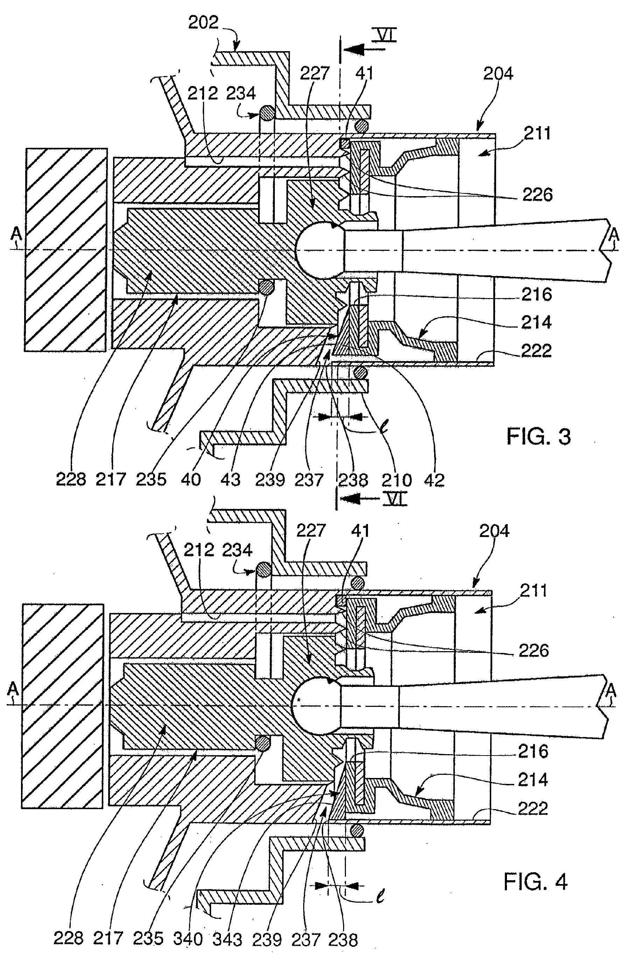

Un deuxième mode de réalisation de l'invention va maintenant être décrit en référence aux figures 3, 4 et 6. Les éléments similaires ou identiques à ceux du premier mode de réalisation sont désignés par le même chiffre de référence augmenté de 200.

En référence à la figure 6, dans le second mode de réalisation, le passage de clé 233 est formé par deux perçages s'étendant de part et d'autre des canaux 212, sans les couper, sensiblement perpendiculairement au premier plan axial P ₁.

En référence à la figure 3, la partie arrière saillante 210 du carter 202 est plus courte que dans le premier mode de réalisation. La paroi arrière 238 des passages 237 est avancée axialement d'un écart ℓ par rapport à la lèvre 216. Ainsi, les passages 237 ne sont pas exactement au droit de l'espace qui s'ouvre entre le siège d'étanchéité 220 du plongeur 217 et la lèvre 216 à l'état activé du servomoteur. Une pièce de guidage d'écoulement 40 est agencée dans l'alésage 11 de manière à combler l'écart ℓ. La pièce de guidage 40 présente un anneau de support 41 qui est fixé à la face avant de la lèvre 216 à un niveau radial extérieur par rapport aux sièges de dépression 226. L'anneau de support 41 porte des coins de guidage 42 en saillie vers son intérieur au niveau de chaque passage 237. Chaque coin 42 s'étend selon un arc de cercle correspondant à l'étendue angulaire des passages 237 respectifs et a une section en triangle rectangle présentant une base de largeur sensiblement égale à l'écart ℓ, une face arrière parallèle à la lèvre 216 et une face avant inclinée 43 sensiblement parallèle à la paroi avant 239 du passage 237 correspondant. Ainsi, le coin de guidage 42 guide l'écoulement d'air tangentiellement dans le passage 237 en minimisant l'effet des turbulences dans l'écart ℓ.

Dans la variante représentée à la figure 4, la pièce de guidage d'écoulement 340 est fixée sur la face interne du premier étage 222 de l'alésage 211, au bord arrière des passages 237. Ainsi, la face avant inclinée 343 affleure exactement dans le prolongement de la paroi arrière 238 des passages 237, sans aucun écart entre eux. En cas de déformation du clapet caoutchouc 214, la lèvre 216 peut glisser librement contre la face arrière de la pièce de guidage 340.

Dans une variante non représentée du second mode de réalisation, le passage de clé 233 se situe au même niveau axial que les passages 237 mais dans une orientation angulaire différente.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Notamment , le piston de servomoteur du servomoteur selon l'invention peut comporter un nombre quelconque de passages d'air entre la chambre arrière et l'alésage de piston et un nombre quelconque de canaux entre la chambre avant et l'alésage de piston. Dans le second mode de réalisation, la pièce de guidage peut être adaptée de manière connue de l'homme du métier pour présenter une partie de guidage en face de chaque passage d'air.

Le servomoteur peut être à dépression comme décrit ci-dessus, ou être d'un autre type, par exemple un servomoteur pneumatique dans lequel la chambre avant est reliée à la pression atmosphérique et la partie arrière d'alésage de piston est reliée à une source de pression supérieure.

## Revendications

1. Servomoteur d'assistance, notamment pour le freinage d'un véhicule automobile, comportant un carter (2, 202), un piston (4, 104, 204) mobile selon un axe (A-A) dans ledit carter pour transmettre une force d'assistance, ledit piston portant une cloison transversale (7) séparant dans le carter une chambre avant (8) dans laquelle règne une pression basse et une chambre arrière (9) dans laquelle règne une pression modulable, un plongeur (17, 117, 217) monté mobile dans un alésage axial (11, 211) dudit piston et déplaçable par un moyen de commande (31) entre une position arrière de repos et des positions avancées d'actionnement, un organe d'obturation (14, 214) fixé dans ledit alésage de manière que, d'une part, à ladite position de repos du plongeur, ledit organe d'obturation coopère avec un premier siège d'étanchéité (20, 220) porté par le plongeur de façon à isoler une partie arrière d'alésage, dans laquelle règne une pression haute supérieure à ladite pression basse, d'une partie avant d'alésage en communication avec ladite chambre arrière à travers au moins un premier passage (37, 137, 237) et avec ladite chambre avant à travers au moins un second passage (12, 212), le servomoteur (1, 101) étant alors dans un état passif, et d'autre part, auxdites positions avancées du plongeur, un espace ouvert entre ledit premier siège d'étanchéité et ledit organe d'obturation met en communication ladite partie arrière d'alésage avec ladite partie avant d'alésage tandis que ledit organe d'obturation coopère avec au moins un second siège d'étanchéité (26, 226) de façon à obturer le ou lesdits second(s) passage(s), le servomoteur étant alors dans un état actif, ledit ou chaque second passage s'étendant dans la paroi latérale (6) du piston à une position angulairement décalée par rapport à chaque premier passage, l'alésage (11, 211) du piston présentant une face d'épaulement (13) tournée vers l'arrière entre deux étages d'alésage (22, 23), ledit ou chaque second passage débouchant dans la partie avant d'alésage (44) à travers ladite face d'épaulement, ledit ou chaque premier passage s'étendant directement à travers une paroi latérale dudit piston de manière à déboucher dans ledit alésage (11, 211) sensiblement au niveau dudit premier siège d'étanchéité (20, 220) ou en arrière de celui-ci, **caractérisé par le fait que** l'étage de moindre diamètre (23) parmi lesdits deux étages d'alésage est conçu pour guider en translation un corps (27, 127, 227) dudit plongeur, ledit ou chaque premier passage (37, 237) débouchant dans ledit alésage au moins partiellement à travers ladite face d'épaulement (13).

2. Servomoteur selon la revendication 1, dans lequel ledit ou chaque premier passage (137) s'étend sensiblement selon une direction radiale dudit piston.

3. Servomoteur selon la revendication 1, dans lequel ledit ou chaque premier passage (37, 237) s'étend obliquement vers l'avant depuis l'intérieur vers l'extérieur dudit piston.

4. Servomoteur selon l'une des revendications 1 à 3, dans lequel ledit organe d'obturation (14, 214) est apte à coopérer avec ledit premier siège d'étanchéité par une lèvre annulaire (16, 216) dudit organe d'obturation, ledit premier siège d'étanchéité comportant une nervure (20, 220) en saillie sur une face arrière dudit plongeur en vis-à-vis de ladite lèvre.

5. Servomoteur selon la revendication 4, dans lequel ledit ou chaque premier passage présente une paroi arrière (38) débouchant dans ledit alésage à l'arrière de ladite lèvre (16).

6. Servomoteur selon l'une des revendications 1 à 5, **caractérisé par le fait qu'**il comporte une clavette (134) engagée sensiblement perpendiculairement à l'axe (A-A) du piston à travers ledit ou un desdits premier(s) passage(s) (137) et dans une rainure (132) du plongeur (117).

7. Servomoteur selon la revendication 4, dans lequel ledit ou chaque premier passage (237) présente une paroi arrière (238) débouchant dans ledit alésage à l'avant de ladite lèvre (216), une pièce de guidage d'écoulement (40, 340) étant agencée dans un espace (ℓ) entre ladite paroi arrière et ladite lèvre de manière à présenter en regard dudit ou de chaque premier passage une partie de guidage (42, 343) sensiblement parallèle à la direction du premier passage correspondant.

8. Servomoteur selon la revendication 7, dans lequel ladite pièce de guidage d'écoulement (40) est portée par ladite lèvre.

9. Servomoteur selon la revendication 7, dans lequel ladite pièce de guidage d'écoulement (340) est portée par le piston, une face avant (343) de ladite partie de guidage étant sensiblement dans le prolongement de ladite paroi arrière (238) de premier passage.

10. Servomoteur selon l'une des revendications 7 à 9, dans lequel ladite pièce de guidage d'écoulement (40, 340) comporte un anneau de support (41) portant la ou lesdites partie(s) de guidage en saillie vers l'intérieur dudit anneau de support au niveau dudit ou de chaque premier passage (237).

11. Servomoteur selon l'une des revendications 1 à 10, dans lequel ledit ou chaque second passage (12, 212) s'étend sensiblement axialement.

12. Servomoteur selon l'une des revendications 1 à 11, comportant deux seconds passages (12, 212) sensiblement symétriques par rapport à un premier plan axial du piston et deux premiers passages (37, 237) sensiblement symétriques par rapport à un autre plan axial du piston sensiblement perpendiculaire au premier.

13. Servomoteur selon l'une des revendications 1 à 12, dans lequel ledit ou chaque second siège d'étanchéité comporte une nervure (26, 226) en saillie sur ladite face d'épaulement, ladite nervure entourant uniquement le second passage (12, 212) correspondant.

14. Servomoteur selon l'une des revendications 1 à 13, dans lequel une paroi avant (39, 239) dudit ou chaque premier passage s'étend obliquement vers l'avant depuis l'intérieur vers l'extérieur dudit piston, ledit premier siège d'étanchéité se situant sensiblement dans le prolongement de ladite paroi avant auxdites positions avancées du plongeur.
